# EUROPEAN PATENT SPECIFICATION

(11) **EP 2 364 766 B1**
(45) Date of publication and mention of the grant of the patent: **18.03.2015**
(21) Application number: 11000536.0
(22) Date of filing: 24.01.2011
(51) Int. Cl.: B01D 53/00, B01D 53/04, B01D 53/26, C07C 1/04, C07C 1/12

(54) **Method for the removal of moist in a gas stream**
Verfahren zur Entfernung von Feuchtigkeit in einem Gasstrom
Procédé de suppression d'humidité dans un flux gazeux

(30) Priority: 25.02.2010 DK 201000155
(43) Date of publication of application: 14.09.2011
(73) Proprietor: Haldor Topsøe A/S, 2800 Kgs. Lyngby (DK)
(72) Inventor: Dahlgaard, Stummann, Troels, 2300 Copenhagen S (DK)

(56) References cited:
- US-A- 4 469 665
- D.M.Ruthven: "Principles of Adsorption and Adsorption Processes", 1984, John Wiley & Sons, New York, XP002640253, ISBN: 0-471-86606-7 pages 336-343, * page 343 *

## Description

The present inventions relates to a method for the removal of moist in a gas stream, in particular from a gaseous product stream having been withdrawn from a chemical reaction by passage through a regenerable moist adsorbent.

The method is in particular useful in the drying of a product stream having been subjected to methanation reaction.

Conventionally employed adsorbents for the removal of moist from industrial gases are alumina, silica gel, calcium sulphate, carbon molecular sieves and graphitized carbons.

The adsorption capacity of adsorbents is limited and depends inter alia on the concentration of moist in the treated gas flow volume and temperature.

Thus, industrial adsorbents must be regenerated when the breakthrough of the moist occurs.

Regeneration involves driving off the moist as a gaseous or liquid phase (desorption), and drying and/or cooling treatment to restore the adsorbent to the optimum condition for reuse.

The regeneration method has a major influence on the plant concept and investment and operating costs.

Conventional methods to regenerate spent adsorbents comprise passing a stream of dry nitrogen or air at temperatures of between 150 to 250°C in opposite flow direction through a bed of spent adsorbent and subsequent cooling of the regenerated adsorbent to its operation temperature.

Such methods require either the presence of dry nitrogen or air in sufficient amounts together with equipment for recycling the drying agent including heaters, blowers and compensators.

Use of nitrogen or air will furthermore leave some amounts of nitrogen or air in the regenerated material, which must be purged from the gas to be dried after treatment in the regenerated adsorbent in order to avoid dilution or contamination of gas.

US patent no. 4,469,665on which the preamble of claim 1 is based, discloses a process for producing ammonia by which the ammonia synthesis gas is dried in a regenerable solid adsorbent prior to introduction into the ammonia synthesis. The adsorbent is regenerated with dried ammonia synthesis gas by separating a part-stream from the gas and further dividing the stream into a regeneration stream and into a cooling stream. The regeneration stream is thereby heated in a heater being installed in the plant for this purpose. The regeneration and cooling stream are subsequently recycled to the main synthesis gas stream.

The main purpose of this invention is to provide a method for the regeneration of adsorbent having been laden with moist during drying of a product gas from a chemical reaction by use of feed gas to the reaction as regeneration gas and which method at the same time meets the requirements for heating and cooling the adsorbent with equipment or process conditions being already existing and employed in a process plant for performing the chemical reaction.

Accordingly, this invention provides a method for removal of moist contained in a gaseous product stream having been subjected to methanation reaction of a gaseous feed stream being heated in a heater prior to the methanation reaction comprising the steps of removing part of the moist by cooling the product stream below its dew point and separating water from the cooled product stream to obtain a partially dried product stream; removing remainder of the moist from the partially dried product stream by passing the stream through at least one bed of solid adsorbent and adsorbing the moist and withdrawing a dried product stream;
regenerating the adsorbent after it is laden with the moist by passing at least part of the gaseous feed stream having been dried in a water separation step and heated in the heater through the bed of loaded adsorbent and desorbing moist into the dried heated feed stream and passing the heated and moist laden feed stream to the reaction; and
cooling the regenerated adsorbent by passing at least a part of the dried feed stream prior to the heating of the stream through the regenerated adsorbent;
passing the feed stream having being withdrawn from the adsorbent through the heater and subsequently to the reaction.

In order to allow continuous drying of the product gas, the method is preferably carried out in at least two beds with the absorbent, so that at least one bed is operated in adsorption mode and least another bed in regeneration mode.

The method is in particularly useful in processes where the feed gas is required to have a low content of moist or being substantially dry before being reacted to a product gas and wherein the reaction forms water in the product gas, which must be removed from the gas.

A large number of chemical reactions require preheating of cool feed gas prior to introduction into the reaction as hot fed gas. The gas is thereby preheated by electrical heating or by passage through a heat exchanger. As an advantage of the invention, the heaters or heat exchangers already being present in the process plant are further used for heating the regeneration gas.

Methanisation of synthesis gas is an example of such a reaction. By this reaction carbon monoxide and carbon dioxide contained in the synthesis gas is converted with hydrogen to methane and water. To suppress the water gas shift reaction, the content of moist in the synthesis gas has to be low. The moist is removed by cooling the gas and separating water. The cooled synthesis gas is reheated to reaction temperature typically by means of heat exchange with a hot medium prior to introduction of the gas into a methanation reactor. The methanation reaction proceeds exothermically and the product gas leaves the methanation reactor at a higher exit temperature than the inlet temperature of the synthesis gas. Thus, the above reheating of the cool synthesis gas will preferably be carried out in a heat-effluent heat exchanger.

The invention will be described in more detail in the following description by reference to the drawings, in which

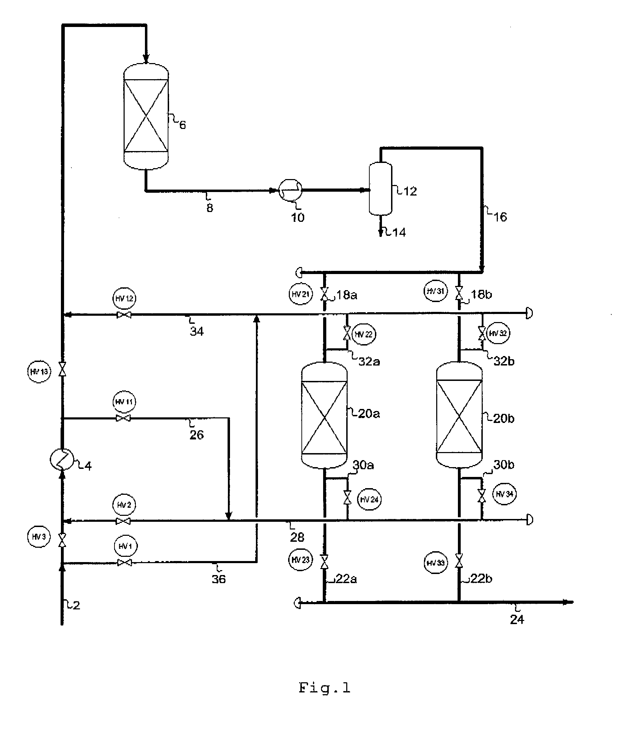

Fig.1 shows a simplified flow sheet of a method of drying a SNG product gas stream being withdrawn from a methanation reactor and dried according to one embodiment of the invention.

Referring to Fig.1, a cool synthesis gas stream, which has been dried in a water separation step (not shown), is forwarded in line 2 to a methanation unit 6. Prior to introduction into unit 6, the gas is preheated to reaction temperature in heater 4. Heater 4 will preferably be in form of a heat exchanger, so that the synthesis gas can be heated by indirect heat exchange with a stream of a hot medium being already present in the process, e.g. hot effluent stream from unit 6 (not shown). Having been introduced into methanation unit 6, carbon oxides and hydrogen contained in the synthesis gas react to methane and water and a hot and moist product stream being rich in methane is withdrawn form unit 6 through line 8. The product stream is cooled in water cooler 10 and the main part of moist is separated from the stream in separator 12 in form of condensed water 14. The pre-dried product gas is passed through line 16 and 18a or 18b to adsorber 20a or 20b for the removal of remaining moist in the product gas. The adsorbers are alternately operated in adsorption mode and regeneration mode, after being loaded with moist. The specific operation mode is controlled by valves HV1-HV34.

When being operated in adsorption mode, adsorber 20a is connected via open valve HV21 to line 16 and the moist product gas is passed via line 18a through adsorber 20a. Residual moist in the product gas is adsorbed in the adsorber on the adsorption material and a substantially dry product gas is withdrawn through open valve HV23 and line 22a. The dry product gas is subsequently collected in product line 24.

After being laden with moist, adsorber 20a is switched off for passage by the moist product gas when closing valve HV21 and HV23.

Adsorber 20b is then set into adsorption mode by opening valve HV31 and HV33 and the moist gas flows then through line 18b and adsorber 20b before being collected in line 24 through line 22b.

Adsorber 20a is regenerated by means of heated synthesis gas being withdrawn in part or completely from line 2 after having passed through heater 4 depending on the position of valve HV13 in line 2. The withdrawn gas is passed through open valve HV11 and line 26 to line 28 being connected to valve HV24 and HV34, arranged in line 30a and 30b, respectively. When regenerating adsorber 20a, valve HV24 is open and HV34 is closed. The heated synthesis gas flows then in opposite direction as the previous flow direction of the moist product gas through adsorber 20a and moist adsorbed on the adsorption material is desorbed into the synthesis gas, which leaves the adsorber through line 32a and open valve HV22 for being returned in line 34 and open valve HV12 to synthesis gas line 2 upstream heater 4.

After regeneration with heated synthesis gas, the adsorption material in adsorber 20a has to be cooled in order to be active in a subsequent adsorption of moist. The material is cooled with a stream of cold synthesis gas. The stream of cold synthesis gas is thereby withdrawn in part or as a whole from line 2 upstream heater 4, depending on the position of valve HV3 in line 2 and passed in line 36 to line 34. During cooling of adsorber 20a, valves HV12 and HV32 in line 34 are closed and the gas is introduced via open valve HV22 in line 32a passed through adsorber 20a. After having cooled the adsorption material in adsorber 20a, the gas leaves the adsorber and is passed through line 30a via open valve HV24 to line 28. In line 28 the gas is returned to synthesis gas line 2 through open valve HV2 upstream heater 4.

The operation of adsorber 20b in adsorption and regeneration mode is analogously performed to that of adsorber 20a.

An overview of the different valve positions during adsorption and regeneration mode of adsorbers 20a and 20b is given in the Table below.

| | Valves | Valve position | |
|---|---|---|---|
| | | Adsorption mode | Regeneration mode |
| ADSORBER 20a | HV 21 | Open | Closed |
| | HV 22 | Closed | Open |
| | HV 23 | Open | Closed |
| | HV 24 | Closed | Open |
| ADSORBER 20b | HV 31 | Open | Closed |
| | HV 32 | Closed | Open |
| | HV 33 | Open | Closed |
| | HV 34 | Closed | Open |

As apparent from the above description, an advantage of the invention is that all moist in the synthesis gas is removed in separator 12. As further an advantage the regeneration gas is the feed gas and additional equipment for feeding external gases for regeneration of adsorbers is avoided.

## Claims

1. Method for removal of moist contained in a gaseous product stream (8) having been subjected to methanation reaction (6) of a gaseous feed stream (2) being heated in a process heater (4) prior to the methanation reaction (6) comprising the steps of
removing part of the moist by cooling the product stream below its dew point and separating water (14) from the cooled product stream to obtain a partially dried product stream (16);
removing remainder of the moist from the partially dried product stream (16) by passing the stream through at least one bed of solid adsorbent (20a,20b) and adsorbing the moist and withdrawing a dried product stream (24) until the adsorbent is saturated with the moist, **characterised by** the steps of
regenerating the saturated adsorbent (20a,20b) by passing at least part (26) of the gaseous feed stream (2) having been dried in a water separation step and heated in the process heater (4) through the bed of loaded adsorbent (20a,20b);
desorbing moist into the dried and heated feed stream and passing the heated and moist laden feed stream (34) to the reaction (6);
cooling the regenerated adsorbent (20a,20b) by passing at least a part (36)of the dried feed stream (2) prior to the heating of the stream through the regenerated adsorbent (20a,20b); and
passing the feed stream (28) being withdrawn from the adsorbent (20a,20b)through the heater (4)and subsequently to the reaction (6).

2. Method of claim 1, wherein the solid adsorbent (20a,20b) is arranged in at least two beds being arranged in parallel and wherein one bed is operated in adsorption mode and the other bed is operated in regeneration and subsequent cooling mode.

3. Method of claim 1 or 2, wherein the process heater (4) is a feed-effluent heat exchanger and wherein the feed stream (2) is heated by indirect heat exchange with the product stream (8).

## Patentansprüche

1. Verfahren zum Entfernen von Feuchtigkeit, die in einem gasförmigen Produktstrom (8) enthalten ist, der einer Methanisierungsreaktion (6) eines gasförmigen Einsatzmaterialstroms (2) unterworfen wurde, der vor der Methanisierungsreaktion (6) in einer Heizvorrichtung (4) des Verfahrens erwärmt wurde, umfassend die Schritte
Entfernen eines Teils der Feuchtigkeit durch Kühlen des Produktstroms unter seinen Taupunkt und Abtrennen von Wasser (14) aus dem gekühlten Produktstrom, um einen teilweise getrockneten Produktstrom (16) zu erhalten;
Entfernen der verbleibenden Feuchte aus dem teilweise getrockneten Produktstrom (16) mittels Durchleiten des Stroms durch mindestens ein Bett aus festem Adsorbens (20a, 20b) und Adsorbieren der Feuchtigkeit und Abziehen eines getrockneten Produktstroms (24), bis das Adsorbens mit der Feuchtigkeit gesättigt ist; **gekennzeichnet durch** die Schritte
Regenerieren des gesättigten Adsorbens (20a, 20b) mittels Durchleiten wenigstens eines Teils (26) des gasförmigen Einsatzmaterialstroms (2), der in einem Wasserabtrennungsschritt getrocknet und in der Heizvorrichtung (4) des Verfahrens erwärmt wurde, **durch** das Bett des beladenen Adsorbens;
Desorbieren von Feuchtigkeit in den getrockneten und erwärmten Einsatzmaterialstrom und Durchleiten des erwärmten und mit Feuchtigkeit beladenen Einsatzmaterialstroms (34) zu der Reaktion (6);
Kühlen des regenerierten Adsorbens (20a, 20b), indem zumindest ein Teil (36) des getrockneten Einsatzmaterialstroms (2) vor dem Erwärmen des Stroms **durch** das regenerierte Adsorbens (20a, 20b) geleitet wird; und
Durchleiten des Einsatzmaterialstroms (28), der aus dem Adsorbens (20a. 20b) abgezogen wurde, **durch** die Heizvorrichtung (4) und danach in die Reaktion (6).

2. Verfahren gemäß Anspruch 1, wobei das feste Adsorbens (20a, 20b) in mindestens zwei Betten angeordnet ist, die parallel angeordnet sind und wobei ein Bett im Adsorptionsmodus betrieben wird und das andere Bett im Regenerations-und anschließenden Kühlungsmodus betrieben wird.

3. Verfahren gemäß Anspruch 1 oder 2, wobei die Heizvorrichtigung (4) des Verfahrens ein Zustrom-Abstrom-Wärmetauscher ist und wobei der Einsatzmaterialstrom (2) durch indirekten Wärmeaustausch mit dem Produktstrom (8) erwärmt wird.

## Revendications

1. Procédé de suppression d'humidité contenue dans un flux de produit gazeux (8) ayant subi une réaction de méthanisation (6) d'un flux d'alimentation gazeux (2) chauffé dans un appareil de chauffage industriel (4) avant la réaction de méthanisation (6), comprenant les étapes consistant à:
supprimer une partie de l'humidité en refroidissant le flux de produit au dessous de son point de rosée et en séparant l'eau (14) du flux de produit refroidi pour obtenir un flux de produit partiellement déshydraté (16);
supprimer le reste d'humidité du flux de produit partiellement déshydraté (16) en faisant passer le flux à travers au moins un lit d'adsorbant solide (20a, 20b) en adsorbant l'humidité et en retirant un flux de produit déshydraté (24) jusqu'à ce que l'adsorbant soit saturé d'humidité, **caractérisé par** les étapes de régénération de l'adsorbant saturé (20a, 20b) en faisant passer à travers le lit d'adsorbant chargé (20a, 20b) au moins une partie (26) du flux d'alimentation gazeux (2) ayant été déshydraté dans une étape de séparation d'eau et chauffé dans l'appareil de chauffage industriel (4);
désorption de l'humidité qui passe dans le flux d'alimentation déshydraté et chauffé et envoi du flux d'alimentation (34) chauffé et chargé d'humidité vers la réaction (6);
refroidissement de l'adsorbant régénéré (20a, 20b) en faisant passer à travers l'adsorbant régénéré (20a, 20b) au moins une partie (36) du flux d'alimentation déshydraté (2) avant de chauffer le flux; et
passage du flux d'alimentation (28) qui est retiré de l'adsorbant (20a, 20b) à travers l'appareil de chauffage industriel (4), suivi de l'envoi du flux vers la réaction (6).

2. Procédé selon la revendication 1, l'adsorbant solide (20a, 20b) étant disposé dans au moins deux lits placés en parallèle, un lit fonctionnant en mode adsorption et l'autre lit fonctionnant en mode régénération suivie d'un refroidissement.

3. Procédé selon la revendication 1 ou 2, l'appareil de chauffage industriel (4) étant un échangeur de chaleur alimentation-effluent et le flux d'alimentation (2) étant chauffé par échange thermique indirect avec le flux de produit (8).
